# EUROPEAN PATENT APPLICATION

(11) **EP 4 811 608 A1**
(43) Date of publication of application: **23.09.2026**
(21) Application number: 25187959.9
(22) Date of filing: 07.07.2025
(51) Int. Cl.: H02K 1/14, H02K 1/16

(54) **STATOR PUNCHING SHEET AND MOTOR AND COMPRESSOR INCLUDING THE SAME**

(30) Priority: 18.03.2025 CN 202520467736 U
(71) Applicant: Huangshi Donper Compressor Co., Ltd., Huangshi, Hubei 435000 (CN)
(72) Inventor: YANG, Baichang, 435000 Huangshi City (CN); DAI, Jingxiong, 435000 Huangshi City (CN); HONG, Ping, 435000 Huangshi City (CN); HUANG, He, 435000 Huangshi City (CN); LIANG, Mancang, 435000 Huangshi City (CN); CHEN, Gang, 435000 Huangshi City (CN)
(74) Representative: Valet Patent Services Limited

(57) **Abstract**

The present application discloses a stator punching sheet and a motor and a compressor including the same, including a punching sheet body (1). The punching sheet body includes an annular yoke (2) and N teeth (3) distributed in the circumferential direction of the yoke, N is 6, 9 or 12, every adjacent teeth are provided therebetween with a winding slot (4), and a gap part is provided on the annular yoke, the central angle corresponding to the gap part is θ1, the θ1 is greater than or equal to 60 degrees and less than or equal to 90 degrees, the chord length corresponding to the gap part is W1, the W1 is greater than or equal to 45 mm and less than or equal to 65 mm. Through the technical solutions of the present application, the dimensional proportions of the teeth and yoke, the slot type and distribution angle of the winding slot, and mutual relationships thereof are further optimized, thereby achieving the beneficial effects of improving the motor performance, lowering the motor material cost and reducing the overall height of the compressor.

## Description

### TECHNICAL FIELD

The present application relates to the technical field of motor devices, and specifically to a stator punching sheet and a motor and a compressor including the same.

### BACKGROUND ART

In recent years, in order to increase the net capacities of refrigeration and freezing compartments of a refrigerator, there are more restriction requirements on the overall height of the compressor of the refrigerator. For a permanent magnet synchronous motor used in a variable frequency compressor, when designing the punching sheet, the design having uniform distribution over a partial circumference and "gap(s)" appears, for example, evolving from the traditional circumferentially uniformly distributed 9 teeth/12 teeth/15 teeth commonly used in the industry to non-circumferentially uniformly distributed 6 teeth/9 teeth/12 teeth, thereby avoiding the mechanism components of the compressor and achieving the objective of reducing the overall height of the compressor.

However, for such stator punching sheet having uniform distribution over a partial circumference and "gap(s)" of a permanent magnet synchronous motor, the motor performance is somewhat reduced due to that 3 slots or 6 slots are reduced relative to the winding number. It is necessary to reasonably design key elements such as slot type, teeth, yoke, and gap size of the stator to ensure that the motor performance meets the requirements to the greatest extent.

### SUMMARY

In view of the above technical problems in the related art, the present application provides a stator punching sheet and a motor and a compressor including the same, which can overcome the above deficiencies in the prior art.

In order to achieve the above technical purposes, the technical solution of the application is implemented as follows:
a stator punching sheet;
where the stator punching sheet includes a punching sheet body, which includes an annular yoke and N teeth distributed in the circumferential direction of the yoke, where N is 6, 9 or 12, and every adjacent teeth are provided therebetween with a winding slot, a gap part is provided on one side or two sides of the annular yoke, and the central angle corresponding to the gap part is θ1, the θ1 is greater than or equal to 60 degrees and less than or equal to 90 degrees; and the chord length corresponding to the gap part is W1, and the W1 is greater than or equal to 45 mm and less than or equal to 65 mm.

Further, the width of the widest portion of the teeth is T1, and the width of the narrowest portion of the teeth is T2, where 5.5 mm ≤ T2 ≤ 8.5 mm, and 1.0 ≤ T1/T2 ≤ 1.4.

Further, the inner radius of the punching sheet body is R1, and the radius of the winding slot is R2, where 28 mm ≤ R1 ≤ 34 mm, and 0.65 ≤ R1/R2 ≤ 0.68.

Further, a transverse distance from the yoke to the edge of the punching sheet body is Y1, and a longitudinal distance from the yoke to the edge of the punching sheet body is Y2, where 0.74 ≤ Y1/T2 ≤ 0.78, and 0.45 ≤ Y2/T2 ≤ 0.80.

Further, the width of the gap part of the yoke is Y3, where 0.6 ≤ Y3/T2 ≤ 1.2.

Further, the winding slot has a slot opening width of 2.8-3.2 mm, and a slot depth of 1.2-2.4 mm.

According to a second aspect of the present application, the present application further provides a motor; and
the motor includes the above-mentioned stator punching sheet.

According to a third aspect of the present application, the present application further provides a compressor; and
the compressor includes the above-mentioned motor.

Beneficial effects of the present application: through the technical solutions of the present application, the dimensional proportions of the teeth and yoke, the slot type and distribution angle of the winding slot, and mutual relationships thereof are further optimized, thereby achieving the beneficial effects of improving the motor performance, lowering the motor material cost and reducing the overall height of the compressor.

### BRIEF DESCRIPTION OF DRAWINGS

In order to more clearly illustrate the technical solutions in the embodiments of the present application or in the prior art, the drawings required to be used in the embodiments will be briefly introduced below. Obviously, the drawings described below are only some embodiments of the present application. For a person ordinarily skilled in the art, other drawings may be obtained based on these drawings without paying creative work.
FIG. 1 is a schematic structural view of a stator punching sheet with 6 teeth non-circumferentially uniformly distributed, in a first example, according to embodiments of the present application;
FIG. 2 is a schematic structural view of a stator punching sheet with 6 teeth non-circumferentially uniformly distributed, in a second example, according to embodiments of the present application;
FIG. 3 is a schematic structural view of a stator punching sheet with 6 teeth non-circumferentially uniformly distributed, in a third example, according to embodiments of the present application;
FIG. 4 is a schematic structural view of a stator punching sheet with 9 teeth non-circumferentially uniformly distributed according to embodiments of the present application; and
FIG. 5 is a schematic structural view of a stator punching sheet with 12 teeth non-circumferentially uniformly distributed according to embodiments of the present application.

In the drawings: 1. punching sheet body; 2. yoke; 3. tooth; 4. winding slot.

### DETAILED DESCRIPTION OF EMBODIMENTS

The technical solutions in the embodiments of the present application will be clearly and completely described in conjunction with the drawings in the embodiments of the present application. Obviously, the described embodiments are only some, but not all, of the embodiments of the present application. Based on the embodiments in the present application, all other embodiments obtained by a person ordinarily skilled in the art fall within the scope of protection of the present application.

It should be understood that, in the description of the embodiments of the present application, orientation or positional relationship indicated by the terms "center", "longitudinal", "transverse", "length", "width", "thickness", "up", "down", "front", "back", "left", "right", "vertical", "horizontal", "top", "bottom", " inner", "outer", "clockwise", "counterclockwise" and the like are based on the orientation or positional relationship shown in the drawings, and are only for the convenience of describing the embodiments of the present application and simplifying the description, rather than indicating or implying that the device or element referred to must have a specific orientation or be constructed and operated in a specific orientation, and therefore cannot be understood as limiting the embodiments of the present application. In addition, the terms "first" and "second" are only used for descriptive purposes, and cannot be understood as indicating or implying importance in relativity or implicitly indicating the number of the indicated technical features. Therefore, the features defined as "first" and "second" may explicitly or implicitly include one or more of the features. In the description of the embodiments of the present application, "several" means two or more, unless otherwise clearly and specifically defined.

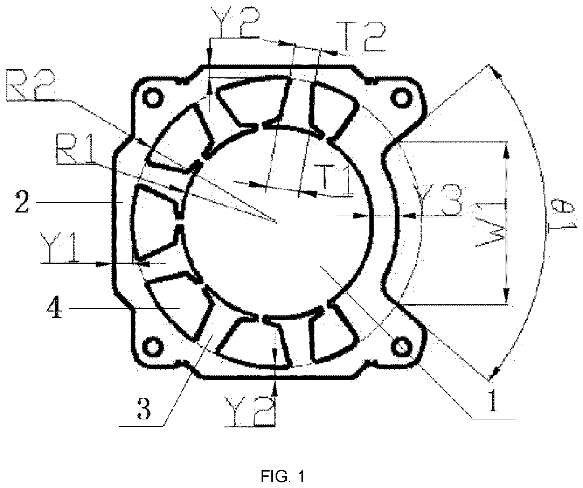

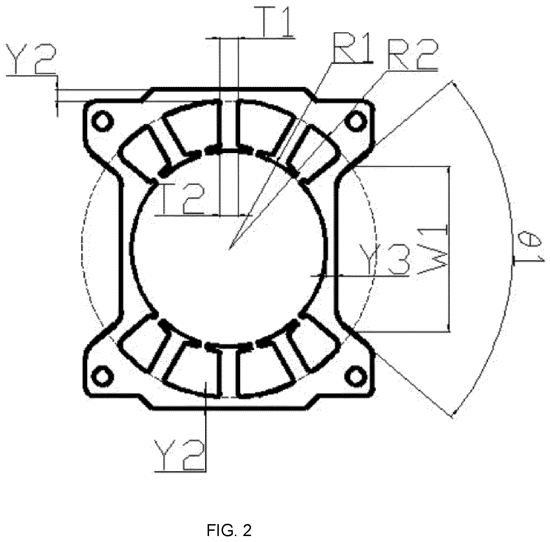

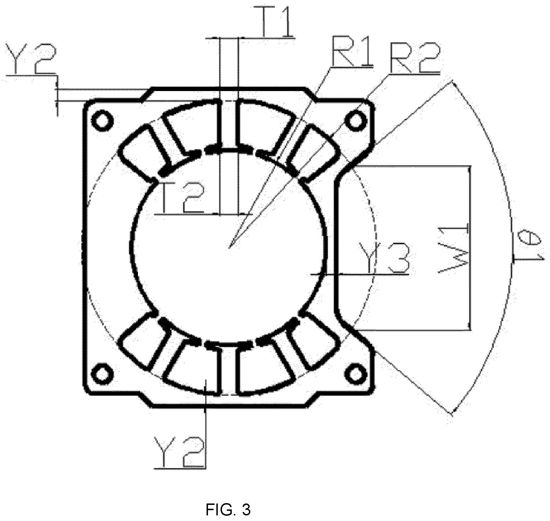

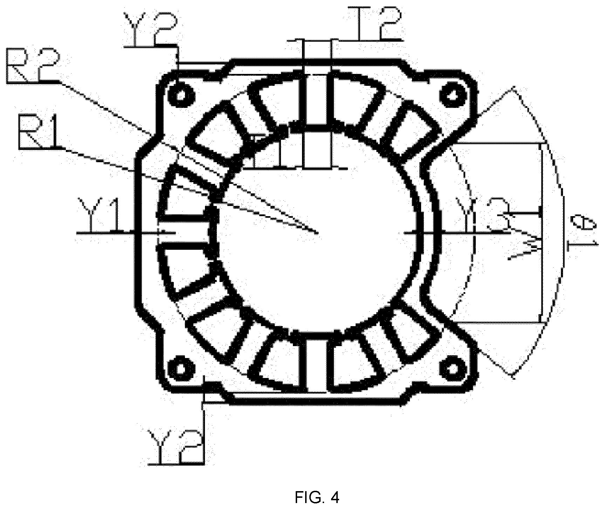

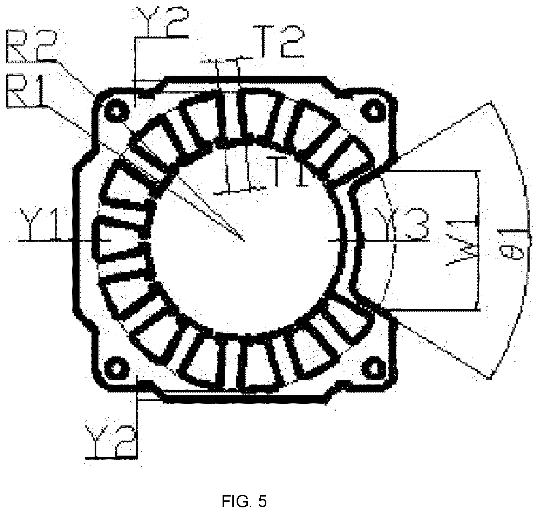

As shown in FIGS. 1-5, a stator punching sheet according to embodiments of the present application includes a punching sheet body 1, where the punching sheet body 1 includes an annular yoke 2 and N teeth 3 distributed in the circumferential direction of the yoke 2, where N is 6, 9 or 12, every adjacent teeth 3 are provided therebetween with a winding slot 4, a gap part is provided on one side or two sides of the annular yoke 2, and a central angle corresponding to the gap part is θ1, where θ1 is greater than or equal to 60 degrees and less than or equal to 90 degrees; and a chord length corresponding to the gap part is W1, where W1 is greater than or equal to 45 mm and less than or equal to 65 mm.

According to the stator punching sheet described in the embodiments of the present application, in a specific example, the width of the widest portion of the teeth 3 is T1, and the width of the narrowest portion of the teeth 3 is T2, where 5.5 mm ≤ T2 ≤ 8.5 mm, and 1.0 ≤ T1/T2 ≤ 1.4.

According to the stator punching sheet described in the embodiments of the present application, in a specific example, the inner radius of the punching sheet body 1 is R1, and the radius of the winding slot 4 is R2, where 28 mm ≤ R1 ≤ 34 mm, and 0.65 ≤ R1/R2 ≤ 0.68.

According to the stator punching sheet described in the embodiments of the present application, in a specific example, the transverse distance from the yoke 2 to the edge of the punching sheet body 1 is Y1, and the longitudinal distance from the yoke 2 to the edge of the punching sheet body 1 is Y2, where 0.74 ≤ Y1/T2 ≤ 0.78, and 0.45 ≤ Y2/T2 ≤ 0.80.

According to the stator punching sheet described in the embodiments of the present application, in a specific example, the width of the gap part of the yoke 2 is Y3, where 0.6 ≤ Y3/T2 ≤ 1.2.

According to the stator punching sheet described in the embodiments of the present application, in a specific example, the winding slot has a slot opening width of 2.8-3.2 mm and a slot depth of 1.2-2.4 mm.

In addition, in a second aspect, the present application further provides a motor; and the motor includes the above-mentioned stator punching sheet.

According to the third aspect of the present application, the present application further provides a compressor; and the compressor includes the above-mentioned motor.

In order to facilitate understanding of the above technical solutions of the present application, the above technical solutions of the present application are described in detail below through specific usage manners.

In specific use, according to the stator punching sheet described in the present application, a stator punching sheet and a motor and a compressor including the same are designed for such punching sheet with non-circumferentially uniformly distributed 6 teeth/9 teeth/12 teeth.

By optimizing the dimensional proportions of the teeth and yoke, the slot type and distribution angle of the winding slot, and mutual relationships thereof, the requirements of improved motor performance, lowered motor material cost and reduced overall height of the compressor are achieved.

For the preferred design example in FIG. 1 of the present application, R1=33.1 mm, T1=11.1 mm, T2=8.15 mm, θ1 =80°, and W1=56 mm.

Compared with the traditional punching sheet with circumferentially uniformly distributed 9 teeth, the motor of the present application uses about 40% less enameled wire, and 5.8% less silicon steel, and has a comprehensive material cost reduced by 3.5 to 4.5 yuan per unit, while the motor efficiency reaches the same level.

To sum up, by means of the above-mentioned technical solutions of the present application, through the technical solutions of the present application, the dimensional proportions of the teeth and yoke, the slot type and distribution angle of the winding slot, and mutual relationships thereof are further optimized, thereby achieving the beneficial effects of improving the motor performance, lowering the motor material cost, and reducing the overall height of the compressor.

The above are only preferred embodiments of the present application and not intended to limit the present application. Any modification, equivalent replacement, improvement, etc. made within the spirit and principle of the present application shall be included in the protection scope of the present application.

## Claims

1. A stator punching sheet, **characterized by** comprising a punching sheet body (1), wherein the punching sheet body (1) comprises an annular yoke (2) and N teeth (3) distributed in a circumferential direction of the yoke (2), wherein N is 6, 9 or 12, every adjacent teeth (3) are provided therebetween with a winding slot (4), a gap part is provided on one side or two sides of the annular yoke (2), a central angle corresponding to the gap part is θ1, and the θ1 is greater than or equal to 60 degrees and less than or equal to 90 degrees; and a chord length corresponding to the gap part is W1, and the W1 is greater than or equal to 45 mm and less than or equal to 65 mm.

2. The stator punching sheet according to claim 1, wherein a width of a widest portion of the teeth (3) is T1, and a width of a narrowest portion of the teeth (3) is T2, wherein 5.5 mm ≤ T2 ≤ 8.5 mm, and 1.0 ≤ T1/T2 ≤ 1.4.

3. The stator punching sheet according to claim 1 or 2, wherein an inner radius of the punching sheet body (1) is R1, and a radius of the winding slot (4) is R2, wherein 28 mm ≤ R1 ≤ 34 mm, and 0.65 ≤ R1/R2 ≤ 0.68.

4. The stator punching sheet according to claim 2, wherein a transverse distance from the yoke (2) to an edge of the punching sheet body (1) is Y1, and a longitudinal distance from the yoke (2) to the edge of the punching sheet body (1) is Y2, wherein 0.74 ≤ Y1/T2 ≤ 0.78, and 0.45 ≤ Y2/T2 ≤ 0.80.

5. The stator punching sheet according to claim 4, wherein a width of the gap part of the yoke (2) is Y3, wherein 0.6 ≤ Y3/T2 ≤ 1.2.

6. The stator punching sheet according to any one of claims 1 to 5, wherein the winding slot has a slot opening width of 2.8-3.2 mm and a slot depth of 1.2-2.4 mm.

7. A motor, comprising the stator punching sheet according to any one of claims 1-6.

8. A compressor, comprising the motor according to claim 7.
